# EUROPÄISCHE PATENTSCHRIFT

(11) **EP 1 870 617 B1**
(45) Veröffentlichungstag und Bekanntmachung des Hinweises auf die Patenterteilung: **22.08.2012**
(21) Anmeldenummer: 07007671.6
(22) Anmeldetag: 14.04.2007
(51) Int. Cl.: F16H 61/32

(54) **Betätigungseinrichtung für ein Getriebe eines Fahrzeugs**
Actuating device for the transmission of a vehicle
Dispositif d'actionnement pour une transmission d'un véhicule

(30) Priorität: 20.06.2006 DE 102006028270
(43) Veröffentlichungstag der Anmeldung: 26.12.2007
(73) Patentinhaber: AMK Arnold Müller GmbH & Co.KG, 73230 Kirchheim / Teck (DE)
(72) Erfinder: Müller, Arnold, 73230 Kirchheim (DE)
(74) Vertreter: Kratzsch, Volkhard

(56) Entgegenhaltungen:
- JP-A- 2005 256 944
- US-A- 5 647 245
- US-A1- 2004 116 229

## Beschreibung

Die Erfindung bezieht sich auf eine Betätigungseinrichtung für ein Getriebe eines Fahrzeugs, insbesondere eines Nutzfahrzeugs, Omnibusses od. dgl., mit den Merkmalen im Oberbegriff des Anspruchs 1.

Eine Betätigungseinrichtung dieser eingangs genannten Art ist aus der US 2004/0116229 A1 bekannt. Mittels dieser Betätigungseinrichtung kann ein Finger, der abtriebsseitig am Ende einer Spindel befestigt ist, in Längsrichtung vor oder zurück und in Querrichtung in der einen oder anderen Richtung quer zur Längsrichtung bewegt werden. Es ist eine Antriebseinrichtung vorgesehen, die auf die Spindel arbeitet. Letztere weist zwei axial benachbarte Gewindeabschnitte auf, deren Gewindeverlauf gegensinnig zueinander ist. Auf jedem Gewindeabschnitt sitzt jeweils eine Spindelmutter der Spindel, wobei jeweils eine Spindelmutter einem Motor zugeordnet ist, der zum jeweiligen Drehantrieb der zugeordneten Spindelmutter dient. Das freie Ende der Spindel ist in einem Lager drehbar und axial verschiebbar gehalten. Im Lager ist dazu eine Gleithülse enthalten. Eine Drehabtriebsbewegung der Spindel bewirkt eine Drehbetätigung des Fingers. Eine Axialverschiebung der Spindel bewirkt eine axiale Bewegung des Fingers. Aus diesem Dokument geht nicht hervor, wie diese vorgenannten Bewegungen weitergeleitet und umgesetzt werden.

Aus der US 5 647 245 A ist eine Betätigungseinrichtung mit Spindel bekannt, an deren Ende eine Roboterhand angeordnet ist.

Aus dem Dokument JP 2005 256944 A ergibt sich eine Betätigungseinrichtung mit einem von einer Spindel angetriebenen Träger. Die Antriebseinrichtung hat zwei Motoren, jedoch nur eine Spindelmutter auf dem Gewindeveriauf der Spindel. Die Spindel weist nur einen Gewindeabschnitt auf. Lediglich einer der beiden Motoren betätigt die nur eine Spindelmutter auf dem Gewindeabschnitt der Spindel, wobei dies über eine Hohlspindel geschieht, durch die ein Abschnitt der Spindel hindurchgeführt ist.

Es sind ferner Betätigungseinrichtungen bekannt, die einen Kreuzschlitten aufweise, der für die Verschiebung eines Längsschlittens in Längsrichtung einen eigenen Spindelmotor und ferner für die Querverschiebung eines Querschlittens in Querrichtung einen weiteren zugeordneten Spindelmotor aufweist, der wie der Querschlitten am Längsschlitten gehalten ist und mit diesem mitgeschleppt werden muss. Eine derartige Betätigungseinrichtung ist aufwendig und kompliziert. Um die jeweilige Lage der beiden Spindelmotoren stets anzuzeigen, sind jeweils zwei Absolutwertsensoren erforderlich. Auch dies ist aufwendig. Von Nachteil ist außerdem, dass eine solche Betätigungseinrichtung ein großes Bauvolumen hat und entsprechend große Einbauverhältnisse verlangt.

Der Erfindung liegt die Aufgabe zugrunde, eine Betätigungseinrichtung der eingangs genannten Art zu schaffen, die einfach, kompakt, kostengünstig und leicht gestaltet ist und einen Einbau auch bei beengten räumlichen Verhältnissen ermöglicht.

Die Aufgabe ist bei einer Betätigungseinrichtung der eingangs genannten Art gemäß der Erfindung durch die Merkmale im Anspruch 1 gelöst. Weitere vorteilhafte Erfindungsmerkmale sowie Ausgestaltungen ergeben sich aus den Unteransprüchen.

Durch diese erfindungsgemäße Gestaltung der Betätigungseinrichtung lassen sich für die Stellbewegung eines Getriebe-Schaltnockens höhere Arbeitsgeschwindigkeiten erzielen. Es sind lediglich geringe zu beschleunigende und zu verzögernde Massen in Form der drehantreibbaren Spindelmuttern und der axialen Spindel vorhanden, was erheblich größere Geschwindigkeiten möglich macht. Von Vorteil ist auch, dass die Betätigungseinrichtung kompakt ist, ein geringes Gewicht hat und erheblich kostengünstiger herstellbar ist als bekannte Einrichtungen dieser Art. Z.B. kann hinsichtlich der Antriebe auf vorhandene Antriebseinheiten etwa baukastenartig zurückgegriffen werden. Von Vorteil ist auch, dass man hinsichtlich der Größe z.B. der Stellwege in Längs- und/oder Querrichtung frei ist und diese frei gestalten kann durch entsprechende Programmierung einer der zentralen Steuerung der Antriebsmotoren dienenden Steuereinrichtung. Damit ist die Betätigungseinrichtung schnell und einfach an unterschiedliche Stellaufgaben anpassbar. Da die Betätigungseinrichtung besonders gedrungen und kompakt baut, eignet sie sich auch mit Vorteil zum Einbau bei beengten Platzverhältnissen.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Hinweis auf die Ansprüche darauf Bezug genommen, wodurch jedoch alle diese Anspruchsmerkmale als an dieser Stelle ausdrücklich und erfindungswesentlich offenbart zu gelten haben.

Die Erfindung ist nachfolgend anhand von in den Zeichnungen gezeigten Ausführungsbeispielen näher erläutert. Es zeigen:
- Fig. 1: eine schematische perspektivische Ansicht einer Betätigungseinrichtung für ein Getriebe,
- Fig. 2: einen schematischen axialen Längsschnitt der Betätigungseinrichtung in Fig. 1 in demgegenüber größerem Maßstab,
- Fig. 3: eine schematische Seitenansicht mit teilweisem Schnitt entlang der Linie III-III in Fig. 2, wobei sich die Betätigungseinrichtung in einem Zwischenstadium der Verstellbewegung befindet,
- Fig. 4 und 5: jeweils eine Ansicht entsprechend derjenigen in Fig. 3, bei denen sich die Betätigungseinrichtung jedoch in jeweiligen unterschiedlichen Betätigungsstellungen befindet,
- Fig. 6: eine schematische, teilweise geschnittene Seitenansicht etwa entsprechend derjenigen in Fig. 3 einer Betätigungseinrichtung gemäß einem zweiten Ausführungsbeispiel.

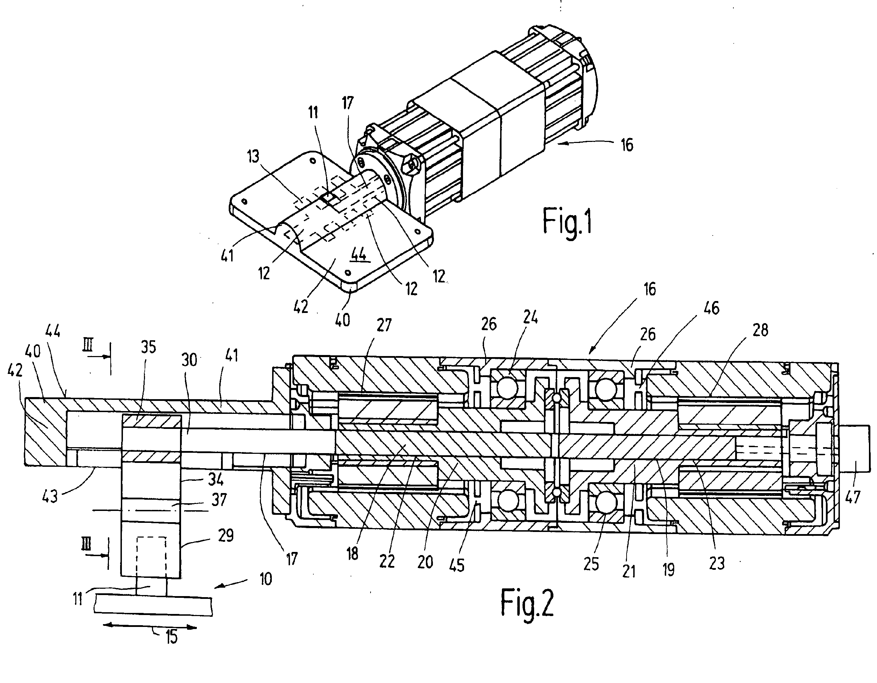

In Fig. 1 bis 4 ist schematisch ein hier interessierender Teil 10 eines Getriebes eines Fahrzeuges, insbesondere eines Nutzfahrzeuges, Omnibusses od.dgl., gezeigt, der einen hochstehenden Schaltnocken 11 aufweist. Der Schaltnocken 11 hat insbesondere die Form eines Außenvielkants, z.B. Außenvierkants. In Fig. 1 ist lediglich gestrichelt angedeutet, dass dieser Schaltnocken 11 zur entsprechenden Betätigung des nicht weiter gezeigten Getriebes innerhalb einer Ebene mit längs verlaufenden Schaltwegen 12 und quer verlaufenden Schaltwegen 13 verschoben wird. In der in Fig. 1 gezeigten Position befindet sich der Schaltnocken 11 in einem quer verlaufenden Schaltweg 13. Dies entspricht einer bestimmten Getriebeschaltung in einem vorgegebenen Gang. Soll der Gang gewechselt und ein anderer Gang geschaltet werden, so wird der Schaltnocken 11 durch Querbewegung aus dem quer verlaufenden Schaltweg 13 heraus in den längs verlaufenden Schaltweg 12 bewegt und längs des letzteren in Längsrichtung nach vorn oder nach hinten soweit bewegt, bis der dem gewünschten zu schaltenden Gang zugeordnete, andere, quer verlaufende Schaltweg 13 erreicht ist. Sodann wird der Schaltnocken 11 durch Querbewegung in diesen neuen quer verlaufenden Schaltweg 13 eingefahren.

Es ist bekannt, diese Stellbewegungen des Schaltnockens 11 zum Schalten verschiedener Gänge des Getriebes mittels eines Kreuzschlittens und jeweiligen Spindelmotoren zu bewerkstelligen. Der Kreuzschlitten weist einen längs einem Führungsträger geführten Längsschlitten auf, der mittels eines am Führungsträger sitzenden Spindelmotors für die Längsbewegung betätigbar ist. Der Längsschlitten ist Träger eines Querschlittens und ferner eines diesem Querschlitten zugeordneten Spindelmotors. Bei der Längsbewegung des Längsschlittens werden der Querschlitten und dessen Spindelmotor mitgeschleppt. Der Querschlitten ist Träger eines Verbindungselements, das mit dem Schaltnocken zum Schalten des Getriebes in Verbindung steht. Eine derartige Betätigungseinrichtung mittels Kreuzschlitten und zweier separater Spindelmotoren ist aufwendig. Sie benötigt viel Platz und einen entsprechend großen Bauaufwand. Für die Stellbewegungen sind jeweils zwei Absolutwertsensoren erforderlich, um die jeweilige Lage der beiden Spindelmotoren zu signalisieren.

In besonderer Gestaltung der beschriebenen Betätigungseinrichtung für ein Fahrzeuggetriebe sieht die Erfindung für diese eine Antriebseinrichtung 16 mit Spindel 17 vor, die zwei axial benachbarte Gewindeabschnitte 18 und 19 hat, wobei der Gewindeverlauf dieser Gewindeabschnitte 18,19 gegenläufig ist. Der Gewindeabschnitt 18 hat z.B. Linksgewinde, während der Gewindeabschnitt 19 entsprechendes Rechtsgewinde aufweist. Die Verhältnisse können auch vertauscht sein. Dem einen Gewindeabschnitt 18 ist eine Spindelmutter 20 und dem anderen Gewindeabschnitt 19 eine entsprechende Spindelmutter 21 zugeordnet. Die Spindelmuttern 20, 21 sind mit entsprechendem Innengewinde versehen und sitzen auf dem jeweiligen Gewindeabschnitt 18 bzw. 19. Jede Spindelmutter 20, 21 ist drehfest mit einer zur Spindel 17 koaxialen Hülse 22 bzw. 23 verbunden und mittels eines Lagers 24 bzw. 25 in Bezug auf ein Gehäuse 26 drehbar gelagert. Jeder Spindelmutter 20, 21 ist zu deren Drehantrieb ein jeweiliger Antriebsmotor 27 bzw. 28 zugeordnet, der insbesondere als Elektromotor ausgebildet ist. Die Hülse 22 bzw. 23 kann Träger des Rotors des Antriebsmotors 27 bzw. 28 sein oder ist selbst als Rotor ausgebildet. Jede Spindelmutter 20, 21 ist mittels des zugeordneten Antriebsmotors 27 bzw. 28 drehbar, jedoch axial unverschiebbar angeordnet, so dass eine Drehbetätigung der jeweiligen Spindelmutter 20 bzw. 21 zu einem Translationsantrieb und/oder Drehantrieb der Spindel 17 führt. Wenn beide Antriebsmotoren 27 und 28 in gleicher Drehrichtung und mit gleicher Drehzahl die jeweils zugehörige Spindelmutter 20, 21 antreiben, hat dies eine reine Drehbewegung der Spindel 17 in der einen oder anderen Richtung zur Folge, die von der jeweiligen Drehrichtung beim Gleichlauf der Antriebsmotoren 27, 28 abhängt.

Werden die Spindelmutterm 20,21 mittels der Antriebsmotoren 27 bzw. 28 mit gleicher Drehzahl, jedoch mit entgegengesetztem Drehsinn, angetrieben, so wird die Spindel 17 translatorisch in Pfeilrichtung 15 in der einen oder anderen Richtung angetrieben, die vom Drehsinn abhängt.

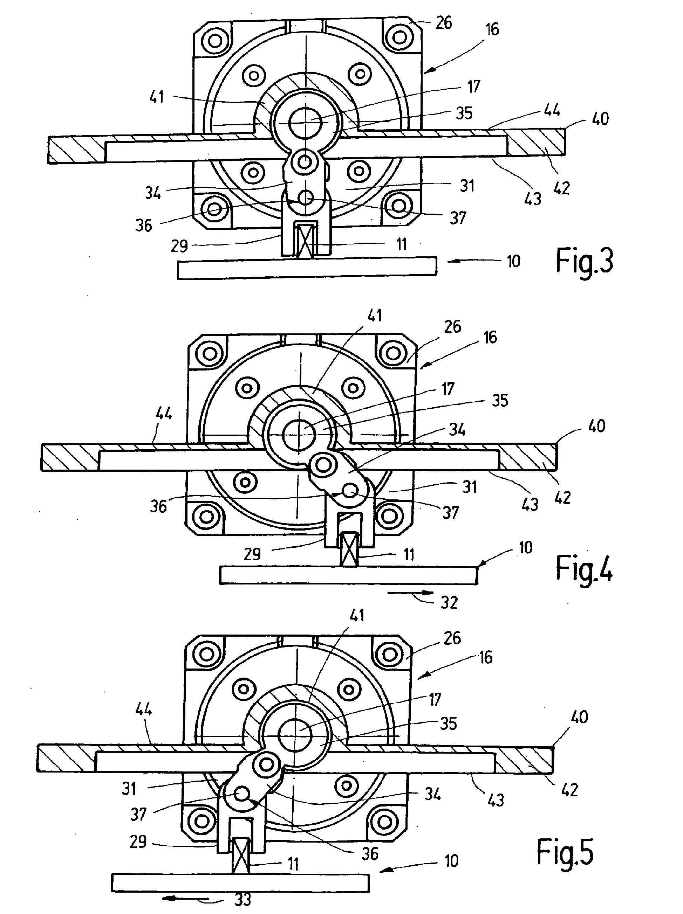

Die Antriebseinrichtung 16 weist ein am Schaltnocken 11 angreifendes und diesen in Längsrichtung gemäß dem längs verlaufenden Schaltweg 12, und zwar vorwärts oder rückwärts, und in Querrichtung gemäß den quer verlaufenden Schaltwegen 13 bewegendes Kupplungsglied 29 auf, das mittels der Spindel 17 betätigbar ist. Die Spindel 17 ist abtriebsseitig im Bereich des in Fig. 2 links befindlichen Endes 30 mit einem Bewegungswandler 31 versehen, mittels dessen die Drehabtriebsbewegung der Spindel 17 in der einen oder anderen Drehrichtung in eine translatorische Querbewegung des Kupplungsgliedes 29 in der einen oder anderen Querrichtung wandelbar ist. Mittels des Bewegungswandlers 31 wird somit die Abtriebsdrehbewegung der Spindel 17 bei Drehung in die eine Richtung umgesetzt in eine translatorische Querbewegung z.B. gemäß Pfeil 32 in Fig. 4 nach rechts. Bei gegensinniger Abtriebsdrehbewegung der Spindel 17 wird diese mittels des Bewegungswandlers 31 in eine translatorische Querbewegung gemäß Pfeil 33 in Fig. 5 nach links umgewandelt. Aufgrund dieser translatorischen Querbewegungen in Pfeilrichtung 32 oder 33 wird somit der vom Kupplungsglied 29 betätigte Schaltnocken 11 in einen der quer verlaufenden Schaltwege 13 geschoben. Fig. 3 zeigt eine Position des Bewegungswandlers 31, die einer Bewegung der Spindel 17 in Längsrichtung gemäß Pfeil 15 vor oder zurück entspricht. Auch dabei wird über das Kupplungsglied 29 der Schaltnocken 11 formschlüssig mitgenommen und demgemäß verschoben. Der Bewegungswandler 31 wird also in Längsrichtung mit der Spindel 17 mitgenommen, wobei deren Längsbewegung eine entsprechende Längsbewegung des Kupplungsgliedes 29 und Schaltnockens 11 zur Folge hat.

Mit der Spindel 17 ist abtriebsseitig ein etwa radial gerichteter Mitnehmer 34 drehfest verbunden, an dem das Kupplungsglied 29 angreift. Der radial abstehende Mitnehmer 34 kann dabei an einer Hülse 35 gehalten sein, die ihrerseits mit der Spindel 17 fest verbunden ist. Der Mitnehmer 34 und das Kupplungsglied 29 sind mittels eines Gelenks 36, z.B. eines Bolzens 37, schwenkbeweglich miteinander verbunden, und zwar um eine zur Achse der Spindel 17 etwa parallel verlaufende Achse. Das Kupplungsglied 29 ist bei der Abtriebsschwenkbewegung der Spindel 17 relativ zum Schaltnocken 11 etwa rechtwinklig zur Schaltebene unter Beibehaltung des Betätigungseingriffes mit dem Schaltnocken 11 verschiebbar. Dies ist dadurch erreicht, dass das Kupplungsglied 29 in den Zeichnungen von oben her auf den Schaltnocken 11 aufgesteckt ist und eine Relativbewegung des Kupplungsgliedes 29 in dieser Richtung relativ zum Schaltnocken 11 möglich ist. Das Kupplungsglied 29 kann einen Innenvielkant, z.B. Innenvierkant, aufweisen, der an einen entsprechenden Außenvielkant, z.B. Außenvierkant, des Schaltnockens 11 angepasst ist und durch Aufstecken darauf mit diesem formschlüssig kuppelbar ist.

Bei einem anderen, nicht gezeigten Ausführungsbeispiel eines Bewegungswandlers sind der Mitnehmer 34 einerseits und das Kupplungsglied 29 andererseits über eine Kupplung miteinander verbunden, die am einen Teil, z.B. am Kupplungsglied 29, ein Langloch und am anderen Teil, z.B. am Mitnehmer 34, einen in das Langloch eingreifenden Nocken aufweist. In diesem Fall erfolgt die vertikale Relativbewegung zwischen dem Mitnehmer 34 und dem Kupplungsglied 29 und nicht, wie beim ersten Ausführungsbeispiel gezeigt ist, zwischen dem Kupplungsglied 29 und dem Schaltnocken 11.

Die Spindel 17 kann mit besonderem Vorteil als Kugelrollspindel ausgebildet sein, die leichtgängig und reibungsarm arbeitet.

Die Antriebseinrichtung 16 weist an einem Ende des Gehäuses 26, insbesondere an dem in Fig. 1 und 2 links befindlichen Gehäuseende, einen am Gehäuse 26 etwa stirnseitig angreifenden, etwa deckelartigen Befestigungsteil 40 auf, der fest mit der Antriebseinrichtung 16 verbunden ist. Mit diesem Befestigungsteil 40 ist die Antriebseinrichtung 16 an ein nicht weiter dargestelltes Getriebegehäuse von oben her aufsetzbar und daran lösbar befestigbar. Die Spindel 17 setzt sich in den Befestigungsteil 40 hinein fort. Der Bewegungswandler 31 ist im Befestigungsteil 40 angeordnet, wobei der radiale Mitnehmer 34 und das Kupplungsglied 29 aus dem Befestigungsteil 40 in den Zeichnungen nach unten herausragen. Der Befestigungsteil 40 weist einen sich in Verlängerung der Spindel 17 und etwa koaxial zu deren Längsmittelachse erstreckenden Rohrteil 41 auf, in dem die Spindel 17 mit der Hülse 35 geführt ist, die den Mitnehmer 34 trägt. Der Rohrteil 41 des Befestigungsteils 40 erstreckt sich über einen Umfangswinkel, der größer 180° und kleiner 360° ist, derart, dass die Hülse 35 mit der Spindel 17 über einen Umfangswinkel größer 180° vom Rohrteil 41 umfasst und gegen Herausrutschen in Fig. 3 bis 5 nach unten gesichert sind. Auf diese Weise bildet der Rohrteil 41 eine Längsführung mit Lagereigenschaft quer zur Längsmittelachse der Spindel 17 und lässt eine beidseitige Schwenkbewegung des Mitnehmers 34 zu.

Der Befestigungsteil 40 ist als hohle Platte 42 ausgebildet, die auf einer in Fig. 2 bis 5 unten verlaufenden Breitseite 43 geöffnet ist und im Bereich der gegenüberliegenden anderen Breitseite 44 den Rohrteil 41 aufweist.

Die Antriebseinrichtung 16 ist mit einer nicht weiter dargestellten Steuereinrichtung ausgestattet, mittels der die Antriebsmotoren 27, 28 hinsichtlich ihrer Drehzahl, Drehrichtung und/oder bedarfsweise hinsichtlich ihres Antriebsmoments gesteuert sind. In Fig. 2 ist schematisch angedeutet, dass dem Antriebsmotor 27 und dem Antriebsmotor 28 jeweils ein rotativer Sensor 45 bzw. 46 zugeordnet ist, über den die Umdrehungen der zugeordneten Spindelmutter 20 bzw. 21 erfasst werden. Ferner ist der Spindel 17 ein Absolutwert-Linearsensor 47 für die Spindellängsbewegung zugeordnet, der ebenfalls nur schematisch angedeutet ist. Für eine Regelung des Betriebs der Antriebseinrichtung 16 stehen die Sensoren 45 bis 47 mit der nicht gezeigten Steuereinrichtung in Verbindung, wodurch der Steuereinrichtung die jeweiligen Ausgangssignale der Sensoren 45 bis 47 zugeführt werden. Die Ausgangssignale können in einem nicht dargestellten Regler mit jeweiligen Sollwerten verglichen werden, wobei mittels des Reglers elektrische Stellsignale für die Betätigung der Antriebsmotoren 27 bzw. 28 erzeugt werden, um durch entsprechende Ansteuerung der Antriebsmotoren 27, 28 die vorgegebene Schaltposition des Schaltnockens 11 herbeizuführen.

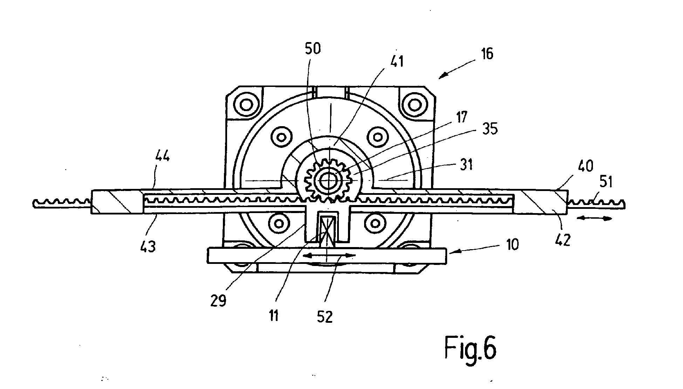

Bei dem in Fig. 6 gezeigten zweiten Ausführungsbeispiel sind für die Teile, die dem ersten Ausführungsbeispiel in Fig. 1 bis 5 entsprechen, gleiche Bezugszeichen verwendet, so dass dadurch zur Vermeidung von Wiederholungen auf die Beschreibung des ersten Ausführungsbeispieles Bezug genommen ist.

Der in Fig. 6 gezeigte Bewegungswandler 31 weist ein Abtriebsrad 50, insbesondere Zahnrad, auf, das abtriebsseitig drehfest mit der Spindel 17 verbunden ist. Ferner ist eine quer zur Längsmittelachse der Spindel 17 gerichtete Stange 51, insbesondere Zahnstange, vorgesehen, mit der das Abtriebsrad 50 in Getriebeeingriff steht. Das Abtriebsrad 50 und die damit in Eingriff stehende Stange 51, insbesondere Zahnstange, werden in Längsrichtung gemäß Pfeil 15 mit der Spindel 17 mitgenommen. Das Kupplungsglied 29 ist an der Stange 51, insbesondere Zahnstange, befestigt, z.B. mit dieser einstückig. Eine Schwenkbewegung der Spindel 17 in der einen oder anderen Drehrichtung hat eine entsprechende Schwenkbewegung des Abtriebsrades 50 zur Folge, wodurch die Stange 51, insbesondere Zahnstange, in Richtung des Pfeiles 52 nach links oder nach rechts verschoben wird. Dies hat eine entsprechende Verschiebung des Kupplungsgliedes 29 und damit des Schaltnockens 11 zur Folge.

Im übrigen gilt für das zweite Ausführungsbeispiel gemäß Fig. 6 die vorstehende Beschreibung.

Die Antriebseinrichtung 16 ist einfach und kompakt. Sie benötigt nur wenig Bauelemente. Der erforderliche Bauraum ist klein. Die Antriebseinrichtung 16 kann auf ein Getriebe von oben aufgesetzt werden. Von Vorteil ist ferner, dass die einzelnen Antriebsmotoren 27 und 28 der Antriebseinrichtung 16 kleiner, leichter und kostengünstiger gestaltet werden können als dies bei Antriebseinrichtungen mit Kreuzschlitten und zwei separaten Spindelmotoren der Fall ist, bei denen die gesamte Stellkraft vom jeweiligen Spindelmotor aufgebracht werden muss. Im Vergleich dazu ermöglicht die Antriebseinrichtung 16, dass sich die Kraft beider Antriebsmotoren 27,28 beim jeweiligen Bewegungsvorgang addiert. Die Antriebseinrichtung 16 ist auch besonders einfach einer Steuerung oder Regelung zugänglich. Die Verstellung des Schaltnockens 11 in Längsrichtung und in Querrichtung geschieht in einfacher Weise praktisch ohne bewegte Antriebsteile. Von Vorteil ist ferner, dass über den Absolutwert-Linearsensor 47 in Verbindung mit den beiden anderen rotativen Sensoren 45 und 46 die jeweilige Position des Schaltnockens 11 im Absolutwert festgehalten wird, so dass auch bei etwaigem Stromausfall und Wiedereinschaltung die jeweilige Getriebeschaltung im Display erkennbar bleibt. Man erkennt, dass der für den Translationsantrieb und den Drehantrieb vorgesehene, jeweils auf die Spindel 17 arbeitende Antrieb mit den Spindelmuttern 20, 21 und zugeordneten Antriebsmotoren 27 bzw. 28 einfach, kostengünstig und in hohen Maße effektiv ist. Es sind jeweils nur geringe Massen zu beschleunigen und zu verzögern, weswegen bei Bedarf auch große Stellgeschwindigkeiten für den Schaltnocken 11 und somit Schaltgeschwindigkeiten erreichbar sind. Von Vorteil ist ferner, dass sowohl die Hublänge für die Längsbewegung als auch der jeweilige Schwenkwinkel beim Drehantrieb für die Bewegung in Querrichtung frei gestaltet und gewählt werden können, je nachdem, welche Wege zur Verstellung des Schaltnockens 11 verlangt werden. Allein durch entsprechende Programmierung der nicht gezeigten Steuereinrichtung und Umprogrammierung dieser lässt sich schnell und einfach eine Änderung der Bewegungen in Längsrichtung und/oder Querrichtung einstellen.

## Patentansprüche

1. Betätigungseinrichtung für ein Getriebe eines Fahrzeuges, insbesondere eines Nutzfahrzeuges, Omnibusses od. dgl., mittels der ein Mitnehmer (34) in Längsrichtung vor oder zurück und in Querrichtung in der einen oder anderen Richtung quer zur Längsrichtung bewegt wird, mit einer Antriebseinrichtung (16) mit einer Spindel (17), die zwei axial benachbarte Gewindeabschnitte (18, 19) aufweist, deren Gewindeverlauf gegensinnig zueinander ist, mit jeweils einer Spindelmutter (20, 21) auf jedem Gewindeabschnitt (18, 19) der Spindel (17) und mit jeweils einem Antriebsmotor (27, 28) für jede Spindelmutter (20, 21) zu deren Drehantrieb,
**dadurch gekennzeichnet,**
**dass** die Spindel (17) abtriebsseitig mit einem Bewegungswandler (31) versehen ist, der in Längsrichtung mit der Spindel (17) mitgenommen wird und mittels dessen die Drehabtriebsbewegung der Spindel (17) in der einen oder anderen Drehrichtung in eine translatorische Querbewegung eines Kupplungsgliedes (29) in der einen oder anderen Querrichtung und die Längsbewegung der Spindel (17) in eine entsprechende Längsbewegung des Kupplungsgliedes (29) wandelbar ist, das an einem Schaltnocken (11) des Getriebes angreifen kann und diesen in Längs- und Querrichtung bewegen kann und mittels der Spindel (17) betätigbar ist, dass die Antriebseinrichtung (16) an einem Ende ihres Gehäuses (26) einen daran angreifenden, etwa deckelartigen Befestigungsteil (40) aufweist, mit dem die Antriebseinrichtung (16) an einem Getriebegehäuse befestigbar ist, dass die Spindel (17) sich in den Befestigungsteil (40) hinein fortsetzt und dass der Bewegungswandler (31) im Befestigungsteil (40) angeordnet ist.

2. Betätigungseinrichtung nach Anspruch 1 oder 2,
**dadurch gekennzeichnet ,**
**dass** mit der Spindel (17) abtriebsseitig der radial gerichte Mitnehmer (34) drehfest verbunden ist, an dem das Kupplungsglied (29) angreift.

3. Betätigungseinrichtung nach Anspruch 2,
**dadurch gekennzeichnet,**
**dass** der Mitnehmer (34) und das Kupplungsglied (29) über eine ein Langloch am einen Teil und einen in das Langloch eingreifenden Nocken am anderen Teil aufweisende Kupplung miteinander verbunden sind.

4. Betätigungseinrichtung nach Anspruch 2,
**dadurch gekennzeichnet ,**
**dass** der Mitnehmer (34) und das Kupplungsglied (29) mittels eines Gelenks (36), z.B. eines Bolzens (37), schwenkbeweglich verbunden sind und das Kupplungsglied (29) etwa rechtwinklig zur Schaltebene relativ zum Schaltnocken (11) unter Beibehaltung des Betätigungseingriffs verschiebbar ist.

5. Betätigungseinrichtung nach einem der Ansprüche 1 bis 4,
**dadurch gekennzeichnet,**
**dass** das Kupplungsglied (29) einen Innenvielkant, z.B. Innenvierkant, aufweist, der an einen entsprechenden Außenvielkant, z.B. Außenvierkant, des Schaltnockens (11) angepasst ist und durch Aufstecken darauf mit diesem formschlüssig kuppelbar ist, oder die Verhältnisse kinematisch vertauscht sind.

6. Betätigungseinrichtung nach Anspruch 1,
**dadurch gekennzeichnet,**
**dass** der Bewegungswandler (31) ein mit der Spindel (17) abtriebsseitig drehfest verbundenes Abtriebsrad (50), z.B. Abtriebszahnrad, und eine quer zur Spindel (17) gerichtete Stange (51), insbesondere Zahnstange, aufweist, mit der das Abtriebsrad (50) in Getriebeeingriff steht.

7. Betätigungseinrichtung nach Anspruch 6,
**dadurch gekennzeichnet,**
**dass** das Abtriebsrad (50), insbesondere Abtriebszahnrad, und die damit in Eingriff stehende Stange (51), insbesondere Zahnstange, in Längsrichtung mit der Spindel (17) mitgenommen werden.

8. Betätigungseinrichtung nach Anspruch 6 oder 7,
**dadurch gekennzeichnet,**
**dass** das Kupplungsglied (29) an der Stange (51), insbesondere Zahnstange, befestigt ist, insbesondere damit einstückig ist.

9. Betätigungseinrichtung nach einem der Ansprüche 1 bis 8,
**dadurch gekennzeichnet ,**
**dass** die Spindel (17) als Kugelrollspindel ausgebildet ist.

10. Betätigungseinrichtung nach einem der Ansprüche 2 bis 9,
**dadurch gekennzeichnet ,**
**dass** der radiale Mitnehmer (34) und das Kupplungsglied (29) aus dem Befestigungsteil (40) herausragen.

11. Betätigungseinrichtung nach einem der Ansprüche 2 bis 10,
**dadurch gekennzeichnet ,**
**dass** der radiale Mitnehmer (34) an einer mit der Spindel (17) fest verbundenen Hülse (35) gehalten ist und die Spindel (17) mit der Hülse (35) in einem Rohrteil (41) des Befestigungsteils (40) geführt ist.

12. Betätigungseinrichtung nach Anspruch 11,
**dadurch gekennzeichnet ,**
**dass** der Rohrteil (41) des Befestigungsteils (40) sich über einen Umfangswinkel erstreckt, der größer 180° und kleiner 360° ist.

13. Betätigungseinrichtung nach einem der Ansprüche 11 oder 12,
**dadurch gekennzeichnet,**
**dass** der Befestigungsteil (40) als hohle Platte (42) ausgebildet ist, die auf einer Breitseite (43) geöffnet ist und im Bereich der anderen Breitseite (44) den Rohrteil (41) aufweist.

14. Betätigungseinrichtung nach einem der Ansprüche 1 bis 13,
**dadurch gekennzeichnet,**
**dass** die Antriebsmotoren (27,28) hinsichtlich ihrer Drehzahl, Drehrichtung und/oder ihres Antriebsmoments mittels einer Steuereinrichtung gesteuert sind.

15. Betätigungseinrichtung nach einem der Ansprüche 1 bis 14,
**dadurch gekennzeichnet,**
**dass** jedem Antriebsmotor (27,28) ein rotativer Sensor (45,46) zugeordnet ist.

16. Betätigungseinrichtung nach einem der Ansprüche 1 bis 15,
**dadurch gekennzeichnet ,**
**dass** der Spindel (17) ein Absolutwert-Linearsensor (47) für die Spindellängsbewegung zugeordnet ist.

17. Betätigungseinrichtung nach dem Anspruch 16 wennabhängig von 14 und 15,
**dadurch gekennzeichnet.**
**dass** die rotativen Sensoren (45,46) und/oder der Linearsensor (47) mit der Steuereinrichtung in Verbindung stehen und jeweilige Ausgangssignale dieser Sensoren (45,46 und 47) der Steuereinrichtung zugeführt werden.

## Claims

1. Actuating device for a transmission of a vehicle, in particular of a commercial vehicle, omnibus or the like, by means of which actuating device a dog (34) is moved forwards or backwards in the longitudinal direction and, in the transverse direction, in one or the other direction transversely with respect to the longitudinal direction, having a drive device (16) with a spindle (17) which has two axially adjacent threaded portions (18, 19), the thread courses of which are in opposite directions with respect to one another, having in each case one spindle nut (20, 21) on each threaded portion (18, 19) of the spindle (17) and having in each case one drive motor (27, 28) for each spindle nut (20, 21) in order to drive it rotationally, **characterized in that** the spindle (17) is provided on the output side with a movement converter (31) which is driven with the spindle (17) in the longitudinal direction and by means of which the rotational output movement of the spindle (17) in one or the other rotational direction can be converted into a translatory transverse movement of a coupling element (29) in one or the other transverse direction and the longitudinal movement of the spindle (17) can be converted into a corresponding longitudinal movement of the coupling element (29) which can act on a trip dog (11) of the transmission and can move the said trip dog (11) in the longitudinal and transverse directions and can be actuated by means of the spindle (17), **in that** the drive device (16) has, at one end of its housing (26), an approximately cover-like fastening part (40) which acts on the former and by way of which the drive device (16) can be fastened to a transmission housing, **in that** the spindle (17) extends into the fastening part (40), and **in that** the movement converter (31) is arranged in the fastening part (40).

2. Actuating device according to Claim 1 or 2, **characterized in that** the radially directed dog (34), on which the coupling element (29) acts, is connected fixedly on the output side to the spindle (17) so as to rotate with it.

3. Actuating device according to Claim 2, **characterized in that** the dog (34) and the coupling element (29) are connected to one another via a coupling which has a slot on one part and a cam on the other part, which cam engages into the slot.

4. Actuating device according to Claim 2, **characterized in that** the dog (34) and the coupling element (29) are connected in a pivotably movable manner by means of a joint (36), for example a pin (37), and the coupling element (29) can be displaced approximately at right angles to the shifting plane relative to the trip dog (11) with retention of the actuating engagement.

5. Actuating device according to one of Claims 1 to 4, **characterized in that** the coupling element (29) has a polygon socket, for example a square drive, which is adapted to a corresponding external polygon, for example an external square, of the trip dog (11) and can be coupled positively to the latter by being plugged onto it, or the conditions are reversed kinematically.

6. Actuating device according to Claim 1, **characterized in that** the movement converter (31) has an output wheel (50), for example an output gearwheel, which.is connected fixedly on the output side to the spindle (17) so as to rotate with it and a rod (51), in particular a gear rack, which is directed transversely with respect to the spindle (17) and with which the output wheel (50) is in transmission engagement.

7. Actuating device according to Claim 6, **characterized in that** the output wheel (50), in particular output gearwheel, and the rod (51), in particular gear rack, which is in engagement with the former are driven in the longitudinal direction with the spindle (17).

8. Actuating device according to Claim 6 or 7, **characterized in that** the coupling element (29) is fastened to the rod (51), in particular gear rack, in particular is in one piece with it.

9. Actuating device according to one of Claims 1 to 8, **characterized in that** the spindle (17) is configured as a ball bearing spindle.

10. Actuating device according to one of Claims 2 to 9, **characterized in that** the radial dog (34) and the coupling element (29) protrude out of the fastening part (40).

11. Actuating device according to one of Claims 2 to 10, **characterized in that** the radial dog (34) is held on a sleeve (35) which is connected fixedly to the spindle (17), and the spindle (17) is guided with the sleeve (35) in a tubular part (41) of the fastening part (40).

12. Actuating device according to Claim 11, **characterized in that** the tubular part (41) of the fastening part (40) extends over a circumferential angle which is greater than 180° and less than 360°.

13. Actuating device according to either of Claims 11 and 12, **characterized in that** the fastening part (40) is configured as a hollow plate (42) which is open on one lateral side (43) and has the tubular part (41) in the region of the other lateral side (44).

14. Actuating device according to one of Claims 1 to 13, **characterized in that** the drive motors (27, 28) are controlled by means of a control device with regard to their rotational speed, rotational direction and/or their drive moment.

15. Actuating device according to one of Claims 1 to 14, **characterized in that** each drive motor (27, 28) is assigned a rotary sensor (45, 46).

16. Actuating device according to one of Claims 1 to 15, **characterized in that** the spindle (17) is assigned an absolute-value linear sensor (47) for the spindle longitudinal movement.

17. Actuating device according to Claim 16, if dependent on Claims 14 and 15, **characterized in that** the rotary sensors (45, 46) and/or the linear sensor (47) are/is connected to the control device, and respective output signals of said sensors (45, 46 and 47) are fed to the control device.

## Revendications

1. Dispositif d'actionnement pour une transmission d'un véhicule, en particulier d'un véhicule utilitaire, d'un omnibus ou similaire, au moyen duquel un entraîneur (34) est déplacé dans la direction longitudinale vers l'avant ou vers l'arrière et dans la direction transversale dans l'une ou l'autre direction transversalement à la direction longitudinale, avec un dispositif d'entraînement (16) avec une broche (17) qui présente deux portions filetées axialement adjacentes (18, 19), dont le filetage est orienté en sens inverse l'une par rapport à l'autre, avec à chaque fois un écrou de broche (20, 21) sur chaque portion filetée (18, 19) de la broche (17) et avec à chaque fois un moteur d'entraînement (27, 28) pour chaque écrou de broche (20, 21) en vue de son entraînement en rotation,
**caractérisé en ce que**
la broche (17) est munie du côté de la sortie d'un convertisseur de mouvement (31) qui est entraîné avec la broche (17) dans la direction longitudinale, et au moyen duquel le mouvement de sortie rotatif de la broche (17) dans l'un ou l'autre sens de rotation peut être converti en un mouvement transversal de translation d'un organe d'accouplement (29) dans l'une ou l'autre direction transversale et le mouvement longitudinal de la broche (17) peut être converti en un mouvement longitudinal correspondant de l'organe d'accouplement (29), qui peut venir en prise avec une came de commutation (11) de la transmission, et qui peut déplacer celle-ci dans la direction longitudinale et transversale et qui peut être actionné par la broche (17), **en ce que** le dispositif d'entraînement (16) présente à une extrémité de son boîtier (26) une partie de fixation (40) venant en prise avec le boîtier, approximativement en forme de couvercle, avec laquelle le dispositif d'entraînement (16) peut être fixé sur un boîtier de transmission, **en ce que** la broche (17) se prolonge par la partie de fixation (40) et **en ce que** le convertisseur de mouvement (31) est disposé dans la partie de fixation (40).

2. Dispositif d'actionnement selon la revendication 1,
**caractérisé en ce que** l'entraîneur (34) orienté radialement est connecté de manière solidaire en rotation à la broche (17) du côté de la sortie, l'organe d'accouplement (29) venant en prise avec cet entraîneur.

3. Dispositif d'actionnement selon la revendication 2,
**caractérisé en ce que**
l'entraîneur (34) et l'organe d'accouplement (29) sont connectés l'un à l'autre par le biais d'un accouplement présentant un trou oblong sur une partie et une came venant en prise dans le trou oblong sur l'autre partie.

4. Dispositif d'actionnement selon la revendication 2,
**caractérisé en ce que**
l'entraîneur (34) et l'organe d'accouplement (29) sont connectés l'un à l'autre de manière pivotante au moyen d'une articulation (36), par exemple d'un boulon (37), et l'organe d'accouplement (29) peut être déplacé approximativement à angle droit par rapport au plan de commutation par rapport à la came de commutation (11) en conservant l'engagement d'actionnement.

5. Dispositif d'actionnement selon l'une quelconque des revendications 1 à 4,
**caractérisé en ce que**
l'organe d'accouplement (29) présente une section polygonale interne, par exemple une section carrée interne, qui est adaptée à une section polygonale externe correspondante, par exemple une section carrée externe, de la came de commutation (11), et qui peut être accouplée à celle-ci par engagement par correspondance géométrique par enfichage sur celle-ci, ou bien les rapports sont permutés cinématiquement.

6. Dispositif d'actionnement selon la revendication 1,
**caractérisé en ce que**
le convertisseur de mouvement (31) présente une roue de sortie (50) connectée de manière solidaire en rotation du côté de la sortie à la broche (17), par exemple une roue dentée de sortie, et une barre (51) orientée transversalement à la broche (17), notamment une crémaillère, avec laquelle la roue de sortie (50) est en prise de transmission.

7. Dispositif d'actionnement selon la revendication 6,
**caractérisé en ce que**
la roue de sortie (50), notamment la roue dentée de sortie, et la barre (51) en prise avec elle, notamment la crémaillère, sont entraînées dans la direction longitudinale par la broche (17).

8. Dispositif d'actionnement selon la revendication 6 ou 7,
**caractérisé en ce que**
l'organe d'accouplement (29) est fixé sur la barre (51), notamment la crémaillère, notamment est réalisé d'une seule pièce avec celle-ci.

9. Dispositif d'actionnement selon l'une quelconque des revendications 1 à 8,
**caractérisé en ce que**
la broche (17) est réalisée sous forme de vis à billes.

10. Dispositif d'actionnement selon l'une quelconque des revendications 2 à 9,
**caractérisé en ce que**
l'entraîneur radial (34) et l'organe d'accouplement (29) font saillie hors de la partie de fixation (40).

11. Dispositif d'actionnement selon l'une quelconque des revendications 2 à 10,
**caractérisé en ce que**
l'entraîneur radial (34) est maintenu sur une douille (35) connectée fixement à la broche (17), et la broche (17) est guidée avec la douille (35) dans une partie tubulaire (41) de la partie de fixation (40).

12. Dispositif d'actionnement selon la revendication 11,
**caractérisé en ce que**
la partie tubulaire (41) de la partie de fixation (40) s'étend sur un angle périphérique qui est supérieur à 180° et inférieur à 360°.

13. Dispositif d'actionnement selon l'une quelconque des revendications 11 ou 12,
**caractérisé en ce que**
la partie de fixation (40) est réalisée sous forme de plaque creuse (42), qui est ouverte sur un côté large (43), et qui présente la partie tubulaire (41) dans la région de l'autre côté large (44).

14. Dispositif d'actionnement selon l'une quelconque des revendications 1 à 13,
**caractérisé en ce que**
les moteurs d'entraînement (27, 28) sont commandés en termes de leur régime, de leur sens de rotation et/ou de leur couple d'entraînement au moyen d'un dispositif de commande.

15. Dispositif d'actionnement selon l'une quelconque des revendications 1 à 14,
**caractérisé en ce que**
l'on associe à chaque moteur d'entraînement (27, 28) un capteur rotatif (45, 46).

16. Dispositif d'actionnement selon l'une quelconque des revendications 1 à 15,
**caractérisé en ce que**
la broche (17) est associée à un capteur linéaire de valeur absolue (47) pour le mouvement longitudinal de la broche.

17. Dispositif d'actionnement selon la revendication 16 lorsqu'elle dépend des revendications 14 et 15,
**caractérisé en ce que**
les capteurs rotatifs (45, 46) et/ou le capteur linéaire (47) sont en liaison avec le dispositif de commande et des signaux de sortie respectifs de ces capteurs (45, 46 ou 47) sont acheminés au dispositif de commande.
